# EUROPÄISCHE PATENTANMELDUNG

(11) **EP 3 984 966 A1**
(43) Veröffentlichungstag der Anmeldung: **20.04.2022**
(21) Anmeldenummer: 20201721.6
(22) Anmeldetag: 14.10.2020
(51) Int. Cl.: C02F 9/00, C01B 25/26, C02F 1/66, C02F 11/04, C02F 11/121, C02F 11/18, C02F 101/10

(54) **VERFAHREN ZUM BEHANDELN VON PHOSPHOR-/PHOSPHATHALTIGEM ROHSCHLAMM SOWIE VORRICHTUNG ZUM BEHANDELN VON PHOSPHOR-/PHOSPHATHALTIGEM ROHSCHLAMM**

(71) Anmelder: Parforce Engineering & Consulting GmbH, 09599 Freiberg (DE)
(72) Erfinder: Eschment, Jürgen, 09599 Freiberg (DE); Lohmeier, Dr. Reinhard, 09599 Freiberg (DE); Fröhlich, Dr. Peter, 09599 Freiberg (DE); Martin, Dr. Gunther, 09599 Freiberg (DE)
(74) Vertreter: Franke, Markus

(57) **Zusammenfassung**

Die vorliegende Erfindung betrifft ein Verfahren zum Behandeln von phosphor-/phosphathaltigem Rohschlamm (1), wobei das Verfahren die folgenden Verfahrensschritte aufweist:
- Bereitstellen von phosphor-/phosphathaltigem Rohschlamm (1),
- Eindicken des phosphor-/phosphathaltigen Rohschlamms (1) zur Gewinnung eines eingedickten Rohschlamms (22) unter Abtrennen eines ersten flüssigen Anteils (3),
- Desintegrieren des eingedickten Rohschlamms (1) zur Gewinnung eines desintegrierten Rohschlamms (23),
- Verdünnen des desintegrierten Rohschlamms (23) durch Zuführen einer Flüssigkeit (13, 21) zu dem desintegrierten Rohschlamm (23),
- Eindicken des verdünnten desintegrierten Rohschlamms (24) zur Gewinnung eines eingedickten desintegrierten Rohschlamms (25) unter Abtrennen eines zweiten flüssigen Anteils (8),
- Abtrennen von Phosphor/Phosphat aus dem zweiten flüssigen Anteil (8).

Ferner betrifft die Erfindung eine Vorrichtung zum Behandeln von phosphor-/phosphathaltigem Rohschlamm (1).

## Beschreibung

Die Erfindung betrifft ein Verfahren zum Behandeln von phosphor-/phosphathaltigem Rohschlamm, beispielsweise innerhalb eines Kläranlagenbetriebs. Des Weiteren betrifft die Erfindung eine Vorrichtung zum Behandeln von phosphor-/phosphathaltigem Rohschlamm, insbesondere eine Vorrichtung zur Durchführung des erfindungsgemäßen Verfahrens.

Bei der Abwasserbehandlung entsteht Rohschlamm in verschiedensten Ausführungsformen, insbesondere in Form von Überschuss-, Primär- oder Tertiärschlamm, der unter anderem Pflanzennährstoffe, wie Phosphor und Stickstoff sowie organische und anorganische Inhaltsstoffe umfasst. Unter dem Begriff Klärschlamm wird vorliegend insbesondere ein Abfall aus der abgeschlossenen Behandlung von Abwasser in Abwasserbehandlungsanlagen verstanden. Unter Rohschlamm wird vorliegend insbesondere nicht-stabilisierter oder teilstabilisierter Schlamm, der Abwasserbehandlungsanlagen vor Abschluss der Abwasserbehandlung entnommen wird, verstanden. Unter Rohschlamm wird vorliegend insbesondere Überschuss-, Primär-, Sekundär- oder Tertiärschlamm verstanden. Regelmäßig liegt der Phosphor im Rohschlamm in Form von Phosphat und/oder von Orthophosphat, vor. Die Rückgewinnung von Phosphor/Phosphat aus dem Rohschlamm ist zum einen dahingehend vorteilhaft, dass relativ kostengünstig ein Produkt gewonnen werden kann, das beispielsweise als Bestandteil von Düngemittel eingesetzt werden kann, bspw. in Form von Phosphatdünger. Ferner ist eine Rückgewinnung von Phosphor, insbesondere in Form von Phosphat, aus dem Rohschlamm notwendig, um zu gewährleisten, dass der Phosphorgehalt des Endprodukts der Kläranlage, bspw. des Klärschlamms oder Faulschlamms, möglichst niedrig ist. Dies insbesondere vor dem Hintergrund der im Jahr 2017 novellierten Klärschlammverordnung, die kommunale Klärschlammerzeuger ab 2029 dazu verpflichtet, Phosphor rückzugewinnen, wenn der Phosphorgehalt des Klärschlamms 20 g/kg und mehr in der Klärschlammtrockenmasse beträgt, somit größer oder gleich 20 g Phosphor (P) /kg Trockenmasse (TM) ist.

Weiterhin ist eine Rückgewinnung von Phosphor bzw. Phosphat aus Rohschlamm besonders vorteilhaft, da hierdurch die Rückbelastung der Kläranlage mit Phosphor bzw. Phosphat herabgesetzt wird. Zu einer Rückbelastung der Kläranlage mit Phosphor bzw. Phosphat kommt es beispielsweise durch das Eindicken bzw. Entwässern von Rohschlämmen.

Ein weiterer darüber hinaus gehender Vorteil der Rückgewinnung von Phosphor bzw. Phosphat aus Rohschlamm ist die Unterdrückung der Bildung von spontan Inkrustationen von Magnesiumammoniumphosphat in Anlagenteilen der Schlammbehandlung von Kläranlagen, die zu Schäden führen. Unter bestimmten Voraussetzungen (Magnesiumgehalt im Abwasser, Anteil an gelöstem Phosphat im Rohschlamm, pH-Wert) bilden sich Magnesiumammoniumphosphatkristalle und lagern sich an Rohrleitungssystemen, Faulbehältern und Maschinenteilen an, bilden Inkrustationen oder bilden sandartige Ablagerungen.

Problematisch ist insbesondere, dass die Phosphor-Rückgewinnung bei relativ niedrigem Phosphorgehalt im Rohschlamm und/oder in der Rohschlammtrockenmasse mit den derzeitigen Verfahren nicht oder nur unter erheblichem Aufwand möglich ist.

Aus der DE 10 2016 112 300 A1 ist ein Verfahren sowie eine Vorrichtung zur Behandlung von phosphathaltigem Klärschlamm bekannt. Das in der vorgenannten Druckschrift beschriebene Verfahren umfasst unter anderem den Verfahrensschritt einer Unterziehung des aufgeschlossenen phosphathaltigen Klärschlamms einer Mikrofiltration zum Erhalt eines ersten flüssigen phosphathaltigen Filtrats und von eingedicktem Klärschlamm.

Ferner ist in der WO 2013/034765 A1 ein Verfahren zur Behandlung von Klärschlamm mit den Behandlungsschritten der Hydrolyse des Klärschlamms und der Faulung des der Hydrolyse unterzogenen hydrolysierten Klärschlamms zur anaeroben Behandlung des Klärschlamms, sowie mit einem Schritt der Abtrennung von Phosphat aus dem mindestens teilweise behandelten Klärschlamm offenbart. Ferner offenbart die vorgenannte Druckschrift eine Abwasserbehandlungsanlage zur Behandlung von Klärschlämmen mit einem solchen Verfahren.

Problematisch ist die Phosphor-Abreicherung des zu behandelnden Rohschlamms, insbesondere dann, wenn der Phosphorgehalt soweit reduziert werden soll, dass im resultieren Klärschlamm der Phosphorgehalt geringer ist als 20 g Phosphor (P) /kg Trockenmasse (TM). Dies ist insbesondere dann eine Herausforderung, wenn der Phosphor- bzw. Phosphatgehalt im Rohschlamm, insbesondere der Phosphor- bzw. Phosphatgehalt im Überschussschlamm, >20 g Phosphor (P) /kg TM und besonders herausfordernd, wenn der Gehalt über 30 g P /kg Trockenmasse (TM) beträgt. Die Problematik besteht darin, dass erstens ein Großteil des in dem Rohschlamm gebundenen Phosphors bzw. Phosphats in die Flüssigphase überführt werden muss, zweitens die phosphat- bzw. phosphorbeladene Flüssigphase möglichst optimal vom Schlamm abgetrennt werden muss und drittens der Phosphor bzw. das Phosphat möglichst vollständig aus der Flüssigphase abgezogen werden muss. Problematisch ist dabei insbesondere die Rücklösung von Phosphor bzw. Phosphat, welches in dem Feststoff-Anteil des Rohschlamms gebunden ist. Dies ist insbesondere problematisch, wenn der desintegrierte, somit der strukturell zerkleinerte, Rohschlamm lediglich entwässert wird. Ferner besteht eine besondere Problematik darin, dass desintegrierter Rohschlamm sich nicht mit bekannten Filtermethoden oder Zentrifugen oder sonstigen Eindickungseinrichtungen bzw. nur mit extremen Aufwand weiter eindicken lässt. Im großtechnischen Maßstab sind derzeit keine Verfahren verfügbar bzw. bekannt, welche desintegrierten Rohschlamm in ausreichendem Maße eindicken. Ferner gibt es keinen positiven Effekt auf die Rücklösung von Phosphat, welches in den Feststoffen gebunden ist, wenn der desintegrierte Rohschlamm lediglich entwässert wird.

Aufgabe der vorliegenden Erfindung ist es daher, ein Verfahren zum Behandeln von phosphor-/phosphathaltigem Rohschlamm bereitzustellen, das ermöglicht, einen besonders hohen Anteil von Phosphat bzw. von Phosphor des phosphor-/phosphathaltigen Rohschlamms abzutrennen. Ferner ist es Aufgabe der Erfindung, eine Vorrichtung zum Behandeln von phosphor-/phosphathaltigem Rohschlamm bereitzustellen, die eine Abtrennung von einem besonders hohen Anteil von Phosphat bzw. Phosphor aus dem phosphor-/phosphathaltigen Rohschlamms ermöglicht.

Diese Aufgabe wird durch ein Verfahren, das die Merkmale des Patentanspruchs 1 aufweist, sowie durch eine Vorrichtung, die die Merkmale des Patentanspruchs 14 aufweist, gelöst.

Das erfindungsgemäße Verfahren zum Behandeln vom phosphor-/phosphathaltigem Rohschlamm weist die folgenden Verfahrensschritte auf:
- Bereitstellen von phosphor-/phosphathaltigem Rohschlamm,
- Eindicken des phosphor-/phosphathaltigen Rohschlamms zur Gewinnung eines eingedickten Rohschlamms unter Abtrennen eines ersten flüssigen Anteils,
- Desintegrieren des eingedickten Rohschlamms zur Gewinnung eines desintegrierten Rohschlamms, insbesondere zur Gewinnung eines desintegrierten Rohschlamms mit höherem Phosphor-/Phosphatanteil in der Flüssigphase,
- Verdünnen des desintegrierten Rohschlamms durch Zuführen einer Flüssigkeit zu dem desintegrierten Rohschlamm,
- Eindicken des verdünnten desintegrierten Rohschlamms zur Gewinnung eines eingedickten desintegrierten Rohschlamms unter Abtrennen eines zweiten flüssigen Anteils,
- Abtrennen von Phosphor/Phosphat aus dem zweiten flüssigen Anteil.

Vorzugsweise sieht das Verfahren ein Zuführen des eingedickten desintegrierten Rohschlamms zu einer Faulungseinrichtung vor.

Es ist auch durchaus denkbar, dass anstatt des Bereitstellens von phosphor-/phosphathaltigem Rohschlamm und dem nachfolgenden Eindicken des phosphor-/phosphathaltigen Rohschlamms zur Gewinnung eines eingedickten Rohschlamms unter Abtrennen eines ersten flüssigen Anteils, unmittelbar eingedickter Rohschlamm bereitgestellt wird oder das Bereitstellen von phosphor-/phosphathaltigem Rohschlamm und das nachfolgende Eindicken des phosphor-/phosphathaltigen Rohschlamms zur Gewinnung eines eingedickten Rohschlamms unter Abtrennen eines ersten flüssigen Anteils zeitlich und räumlich getrennt von den weiteren Verfahrensschritten erfolgt.

Das Verfahren findet insbesondere bei einer Kläranlage Anwendung, insbesondere bei einer Kläranlage für überwiegend kommunale Abwässer.

Durch die zusätzliche Wieder-Verdünnung des desintegrierten Rohschlamms wird durch die Erhöhung des Flüssigphasenanteils gelöster Phosphor aus der Feststoffphase des Rohschlamms extrahiert. Durch die Wieder-Verdünnung wird einerseits die Grundlage für eine erneute mechanische Eindickung geschaffen. Zum anderen kann durch die Verdünnung des desintegrierten Rohschlamms ein größerer Anteil des im Feststoff enthaltenen Phosphats bzw. Phosphors in die Flüssigphase überführt werden, die zumindest teilweise durch den nachfolgend abgetrennten zweiten flüssigen Anteil gebildet wird.
Dies ist insbesondere dann von Vorteil, wenn der Phosphoranteil des Rohschlamms derart hoch ist, dass die Flüssigphase in Bezug auf Phosphor bzw. Phosphat die Sättigungsgrenze erreicht, wobei unter Sättigungsgrenze vorliegend der Zustand verstanden wird, bei dem unter den vorliegenden äußeren Bedingungen wie Druck, Temperatur usw. die Flüssigphase in Bezug auf in der Flüssigphase gelöstes Phosphat bzw. Phosphor derart hoch ist, dass kein weiteres Phosphat bzw. Phosphor in der Flüssigphase gelöst werden kann und somit ein relativ hoher Anteil in der festen Phase und somit der Trockenmasse gebunden bleibt.

Vorzugsweise beträgt der Phosphorgehalt des Rohschlamms 10g/kg bis 60 g/kg bezogen auf die Trockenmasse des Rohschlamms, somit 10 g Phosphor (P) /kg Trockenmasse (TM) bis 60 g Phosphor (P) /kg Trockenmasse (TM).

Es wird als vorteilhaft angesehen, wenn der Phosphorgehalt in dem zweiten flüssigen Anteil mindestens 50 mg P /L, bevorzugt mindestens 200 mg P /L beträgt.

Es wird als vorteilhaft angesehen, wenn der verdünnte desintegrierte Rohschlamm einen Trockensubstanzgehalt bzw. Trockenmassegehalt von 1 Gew.-% bis 3 Gew.-%, bevorzugt von 1,5 Gew.-% bis 2,0 Gew.-% aufweist.

Es hat sich gezeigt, dass nach Wieder-Verdünnung zusätzlich Phosphor/Phosphat aus dem Feststoff des Rohschlammes in die Flüssigphase gelöst wird. Bei der Wieder-Verdünnung des desintegrierten Rohschlamms können so bis zu 50 %, in der Regel 20 % bis 30 % des im Feststoff enthaltenen Phosphors/Phosphats in die Flüssigphase überführt werden. Dadurch kann im Vergleich zum Stand der Technik eine besonders hohe Phosphor-/Phosphat-Abreicherung des eingedickten desintegrierten Rohschlamms erreicht werden. Zudem kann in dem nachfolgenden Verfahrensschritt des Abtrennens des Phosphors/Phosphats aus dem zweiten flüssigen Anteil, der beim Vorgang des Eindickens des verdünnten desintegrierten Rohschlamms gewonnenen wird, eine besonders hohe Ausbeute von Phosphor/Phosphat erreicht werden.

Beim Eindicken kann es sich insbesondere um eine Entwässerung handeln.

Die Abtrennung von Phosphor/Phosphat aus dem zweiten flüssigen Anteil erfolgt vorzugsweise durch Fällung unter Zugabe von Metallsalzen, insbesondere unter Zugabe von magnesiumhaltigen Fällmitteln.

In einer besonders bevorzugten Ausführungsform erfolgt das Abtrennen von Phosphor/Phosphat aus dem zweiten flüssigen Anteil in Form von Struvit. Struvit ist ein hinsichtlich der chemischen Zusammensetzung eng definierter Kristall. Vorzugsweise weist der abgetrennte Struvit einen Phosphorgehalt von mehr als 11 Gew.-%, insbesondere einen Phosphorgehalt nahe des theoretischen Gehaltes von MgNH₄PO₄ * 6 H₂O von etwa 12,6 Gew.-% auf.

Alternativ ist auch die Fällung als schwerlösliche Calciumphosphat-Spezies durch Zugabe von calciumhaltigen Fällmitteln möglich.

Unter Rohschlamm wird vorliegend insbesondere Primär- oder Sekundärschlamm, insbesondere Überschussschlamm, verstanden. Unter Überschussschlamm wird vorliegend insbesondere Belebtschlamm verstanden, der zur Konstanthaltung einer vorgewählten Biomassekonzentration bzw. eines vorgewählten Schlammalters aus einer Belebungsanlage und/oder Nachklärungsanlage abgezogen wird.

Es wird als vorteilhaft angesehen, wenn es sich bei dem phosphor-/phosphathaltigem Rohschlamm um Überschussschlamm handelt. Vorzugsweise weist dieser Überschussschlamm einen Trockensubstanzgehalt von 0,5 Gew.-% bis 1,0 Gew.-% auf.

Es wird als vorteilhaft angesehen, wenn der eingedickte Rohschlamm einen Trockensubstanzgehalt von 1,0 Gew.-% bis 15 Gew.-%, insbesondere von 1,5 Gew.-% bis 10 Gew.-% aufweist, bevorzugt von 3 Gew.-% bis 8 Gew.-%, aufweist, besonders bevorzugt von 4 Gew.-% bis 7 Gew.-% aufweist. Es wird als vorteilhaft angesehen, wenn der eingedickte Rohschlamm einen Trockensubstanzgehalt von 6 Gew.-% bis 8 Gew.-% aufweist.

Es wird als vorteilhaft angesehen, wenn der eingedickte desintegrierte Rohschlamm einen Trockensubstanzgehalt von 5 Gew.-% bis 12 Gew.-%, bevorzugt von 7 Gew.-% bis 10 Gew.-%, aufweist.

Bei der vorliegenden Erfindung können beim Verfahrensschritt des Desintegrierens unterschiedliche Methoden zum Einsatz kommen. Unter Desintegrieren wird vorliegend insbesondere die strukturelle Zerkleinerung von Schlamm und/oder der Aufschluss von in dem Schlamm vorliegenden Strukturen und Mikroorganismen verstanden, die vom einfachen mechanischen Zerschlagen der Schlammflocken bis zum Aufschluss der Mikroorganismen gehen kann. Bei dem erfindungsgemäßen Verfahren kann beispielsweise eine chemische Desintegration, eine biologische Desintegration, eine elektrokinetische sowie eine thermische Desintegration erfolgen. Bei der chemischen Desintegration kommt insbesondere ein Aufschluss des Schlamms mittels Säure oder Base in Betracht und/oder durch biologische Vorversäuerung. Die mechanische Desintegration kann insbesondere auch mittels Ultraschall erfolgen. Das Desintegrieren erfolgt besonders bevorzugt mittels Hydrolyse.

Es ist auch durchaus denkbar, dass eine biologische Vorversäuerung der Desintegration vorgelagert ist oder zusammen mit dieser erfolgt.

Es ist insbesondere vorgesehen, dass beim Desintegrieren Phosphor, insbesondere in Form von Phosphat aus dem Feststoff gelöst wird und zusätzlich, insbesondere durch das nachfolgende Verdünnen des desintegrierten Rohschlamms weiteres Phosphor/Phosphat aus dem Feststoff freizusetzen und in die Flüssigphase zu überführen.

Es wird als vorteilhaft angesehen, wenn der verdünnte desintegrierte Rohschlamm einen pH-Wert von kleiner 8 aufweist, insbesondere einen pH-Wert kleiner oder gleich 7 aufweist, besonders bevorzugt einen pH-Wert von 4 bis 6 aufweist.

Es wird als besonders vorteilhaft angesehen, wenn der Verfahrensschritt des Desintegrierens ohne Anhebung des pH-Wertes erfolgt. Typischerweise wird nach Stand der Technik der pH-Wert des zu desintegrierenden Rohschlamms angehoben, um den Zellaufschluss zu erleichtern. Dies erfolgt beispielsweise durch die Zugabe einer Lauge, beispielsweise Natronlauge. Die Zugabe von Lauge wird insbesondere bei thermischen Desintegrationsverfahren angewendet. Überraschenderweise hat sich gezeigt, dass die Anhebung des pH-Werts, insbesondere die Zugabe von Natronlauge, sich negativ auf die Lösung von Phosphor/Phosphat aus dem Feststoff in den flüssigen Anteil des Rohschlamms, insbesondere des verdünnten desintegrierten Rohschlamms auswirkt. Durch die Zugabe von Natronlauge (NaOH) liegt weniger Phosphor/Phosphat in der Flüssigphase bzw. dem flüssigen Anteil für die spätere Abtrennung vor, im Vergleich zur Verfahrensführung ohne NaOH-Dosierung. Dies ist für die erfindungsgemäße Vorgehensweise mit dem Ziel einer maximalen Phosphor-/Phosphat-Abreicherung des zu Beginn eingebrachten phosphor-/phosphathaltigen Rohschlamms äußerst vorteilhaft. Darüber hinaus hat sich überraschenderweise gezeigt, dass die anschließende Eindickung des desintegrierten Rohschlamms bzw. des verdünnten desintegrierten Rohschlamms vom geringeren pH-Wert des Rohschlamms profitiert.

In einer bevorzugten Ausführungsform erfolgt die Absenkung des pH-Werts beim Vorgang des Desintegrierens des eingedickten Rohschlamms. Insbesondere bei thermischen und/oder thermochemischen Desintegrationsverfahren hat sich gezeigt, dass eine pH-Wert-Absenkung um 0,5 bis 1,0 stattfindet, ohne zusätzliche Säurezugabe.

Es ist aber auch durchaus denkbar, eine pH-Wert-Absenkung des verdünnten desintegrierten Rohschlamms und/oder des eingedickten Rohschlamms und/oder des eingedickten desintegrierten Rohschlamms durch Zugabe einer Säure zu erreichen. Die pH-Wert-Absenkung kann beispielsweise mittels anorganischer Säuren, beispielsweise Salzsäure, Salpetersäure oder Schwefelsäure, und/oder organischer Säuren, beispielsweise Essigsäure oder Zitronensäure, erfolgen. Wie bereits ausgeführt, kann aber auch alleine oder zusätzlich durch die einsetzende pH-Wert-Absenkung bei der thermischen oder thermo-chemischen Hydrolyse eine pH-Wert-Absenkung der vorgenannten Klärschlämme erfolgen.

Vorzugsweise erfolgt das Desintegrieren mittels mechanischer Hydrolyse und/oder chemischer Hydrolyse und/oder thermischer Hydrolyse. Insbesondere erfolgt das Desintegrieren ausschließlich mittels thermischer Hydrolyse.

Es wird als besonders vorteilhaft angesehen, wenn das Eindicken des phosphor-/phosphathaltigen Rohschlamms und/oder das Eindicken des verdünnten desintegrierten Rohschlamms unter Verwendung eines mechanischen Eindickers erfolgt. Bei dem mechanischen Eindicker kann es sich beispielsweise um einen Dekanter, einen Schneckeneindicker, einen Rotationsfilter und/oder einen Bandfilter, beispielsweise einen Bandeindicker, handeln. Alternativ ist die Eindickung auch durch eine Zentrifuge möglich.

Vorteilhafterweise werden, vor dem Eindicken und/oder während des Eindickens des phosphor-/phosphathaltigen Rohschlamms und/oder des verdünnten desintegrierten Rohschlamms, dem phosphor-/phosphathaltigem Rohschlamm bzw. dem desintegrierten Rohschlamm und/oder dem verdünnten desintegrierten Rohschlamm Flockungsmittel und/oder Flockungshilfsmittel zugegeben.

Überraschenderweise hat sich gezeigt, dass nach der Verdünnung des desintegrierten Rohschlamms sich der desintegrierte und wieder-verdünnte Rohschlamm bei Zugabe typischer Flockungsmittel und/oder Flockungshilfsmittel besonders gut eindicken, insbesondere entwässern, lässt.

Es wird als besonders vorteilhaft angesehen, wenn eine Zugabe des Flockungsmittels und/oder des Flockungshilfsmittels nach dem Verdünnen des desintegrierten Rohschlamms erfolgt.

Als besonders vorteilhaft hat sich zur Eindickung des verdünnten desintegrierten Rohschlamms die Verwendung eines Bandfilters erwiesen. Dies insbesondere bei Zugabe von Flockungsmittel und/oder Flockungshilfsmittel zu dem verdünnten desintegrierten Rohschlamm.

Als besonders vorteilhaft hat es sich erwiesen, wenn das Flockungsmittel und/oder das Flockungshilfsmittel Polymere aufweist, bevorzugt Polyacrylamide aufweist. Als Flockungsmittel bzw. Flockungshilfsmittel kommen insbesondere natürliche oder synthetische Flockungsmittel bzw. Flockungshilfsmittel zum Einsatz. Das Flockungsmittel und/oder das Flockungshilfsmittel weist bevorzugt Zellulose und/oder Stärke auf.

Alternativ oder zusätzlich können auch Polyacrylamid(PAM)-freie Flockungshilfsmittel bzw. Flockungsmittel zum Einsatz kommen. Bei diesen Flockungsmitteln bzw. Flockungshilfsmitteln handelt es sich insbesondere um solche auf Basis von Stärke. Diese PAM-freien Flockungsmittel bzw. Flockungshilfsmittel können sowohl kationisch als auch anionisch geladen sein. Typischerweise weisen PAM-freie Flockungsmittel/Flockungshilfsmittel polare und unpolare Funktionalitäten am Stärkemolekül auf.

Nach dem Abtrennen des Phosphors/Phosphats aus dem zweiten flüssigen Anteil liegt eine phosphor-/phosphat-abgereicherte Flüssigkeit vor. Diese phosphor-/phosphat-abgereicherte Flüssigkeit kann an unterschiedlichen Stellen des Verfahrens und/oder vorgelagerten oder nachgelagerten Verfahrensschritten Verwendung finden. Insbesondere kann die phosphat-abgereicherte Flüssigkeit als Flüssigkeit zum Verdünnen des eingedickten desintegrierten Rohschlamms verwendet werden.

Es wird als besonders vorteilhaft angesehen, wenn das Verdünnen des desintegrierten Rohschlamms durch Zuführen von Brauchwasser und/oder Trinkwasser erfolgt. Die Verwendung von Brauchwasser und/oder Trinkwasser hat sich insbesondere bei rein thermischen, thermo-chemischen oder Thermo-Druck-Hydrolyse-Verfahren als vorteilhaft erwiesen, insbesondere dann, wenn in der Faulungseinrichtung kaum zusätzliches Nutzvolumen vorhanden ist und diese Faulungseinrichtungen bereits ohne Verwendung des erfindungsgemäßen Verfahrens an ihrer Kapazitätsgrenze arbeiten. Der Vorteil bei der Verdünnung mit Brauchwasser und/oder Trinkwasser besteht darin, dass Brauchwasser und/oder Trinkwasser kein oder kaum organisches Material enthält, sodass durch das Verdünnen kein oder kaum zusätzliches organisches Material zugeführt wird.

In einer besonders bevorzugten Ausführungsform des Verfahrens ist vorgesehen, dass der der Faulungseinrichtung zugeführte eingedickte desintegrierte Rohschlamm nach der Faulung eingedickt, insbesondere entwässert wird, unter Abtrennen eines dritten flüssigen Anteils. Schlämme, die aus einer Faulungseinrichtung entnommen werden, werden regelmäßig als Faulschlamm bezeichnet. Dieser dritte flüssige Anteil wird dann dem desintegrierten Rohschlamm zugeführt, zwecks Verdünnen des desintegrierten Rohschlamms. Das Verdünnen erfolgt insbesondere mittels eines Teils des dritten flüssigen Anteils. Das Verdünnen mittels zumindest Teilen des dritten flüssigen Anteils hat den Vorteil, dass kein oder zumindest weniger Brauch- oder Trinkwasser zum Verdünnen verwendet werden muss, und zudem den Vorteil, dass der dritte flüssige Anteil mit organischen Stoffen, insbesondere mit Ammoniumstickstoffquellen, belastet ist, was sich vorteilhaft auf das Abtrennen des Phosphors/Phosphats aus dem zweiten flüssigen Anteil auswirkt, insbesondere beim Abtrennen des Phosphors in Form von Phosphat mittels einer Fällung von Magnesium-Ammonium-Phosphat (MAP). Da der dritte flüssige Anteil aufgrund der Faulung Ammonium enthält, kann auf die Zugabe von Ammonium (z. B. in Form von Ammoniakwasser oder Ammoniumsulfat), zwecks Abtrennen des Phosphors/Phosphats als MAP verzichtet oder die Zugabe von Ammonium zumindest reduziert werden.

Das Verdünnen des desintegrierten Rohschlamms unter Verwendung eines Mischers hat sich als besonders vorteilhaft erwiesen, insbesondere um den Anteil des in dem flüssigen Anteil bzw. der Flüssigphase gelösten Phosphors/Phosphats zu erhöhen. Bei dem Mischer handelt es sich bevorzugt um einen Rührkessel, ein Strömungsrohr und/oder eine Vermischungsdüse.

Das Abtrennen von Phosphor/Phosphat kann vorzugsweise mittels einer Magnesium-Ammonium-Phosphat-Fällung (MAP-Fällung) erfolgen.

Das Abtrennen des Phosphors bzw. Phosphats erfolgt vorzugsweise mittels einer Struvit-Abtrennung. Die Struvit-Abtrennung erfolgt vorzugsweise in einem Struvit-Kristallisations-Reaktor und durch Zugabe von NaOH oder KOH zur pH-Wert-Anpassung und MgCl₂ oder MgO oder Mg(OH)₂ zur Lieferung der Magnesiumquelle für die Struvit-Kristallisation. Als besonders vorteilhaft wird es angesehen, wenn das Abtrennen des Phosphors in Form von Phosphat mittels Struvit-Kristallisation erfolgt, wobei die Struvit-Kristalle, insbesondere in Form von gewachsenen Struvit-Kristallen oder in Form von Mikro-Struvit-Kristallen oder in Form von agglomerierten Mikro-Struvit-Kristallen, vorzugsweise mittels Filtration aus der Flüssigphase abgetrennt werden. Bei dem übrig gebliebenen flüssigen Anteil handelt es sich somit um ein phosphor-/phosphat-abgereichertes Filtrat. Dieses phosphor-/phosphat-abgereicherte Filtrat kann dann beispielsweise nach Bedarf verschiedenen Stufen der Kläranlage zugeführt werden. Es ist beispielsweise denkbar, dass das phosphor-/phosphat-abgereicherte Filtrat der Faulung bzw. der Faulungseinrichtung zugeführt wird.

Alternativ ist die Phosphor- bzw. Phosphatabtrennung auch durch eine Kalkfällung möglich. Als Fällungsmittel können dabei calciumhaltige Verbindungen (z. B. CaO, Ca(OH)₂ und/oder calciumhaltige Salze (z. B. CaSO₄, CaCl₂) in Verbindung mit Basen (z. B. NaOH, KOH) verwendet werden. Als Fällungsprodukt kann beispielsweise Tricalciumphosphat (Ca₃(PO₄)₂, TCP), Dicalciumphosphat (CaHPO₄, DCP), Brushit (Ca[PO₃(OH)]·2H₂O) entstehen. Auch ist es möglich, eine Mischung verschiedener Calciumphosphat-Spezies zu erhalten. Die Fest-Flüssig-Trennung erfolgt vorzugsweise mittels Filtration.

Das Eindicken des Schlammes nach der Faulung (Faulschlamm) erfolgt insbesondere derart, dass der entwässerte Faulschlamm einen Trockensubstanzgehalt von größer oder gleich 20 Gew.-%, insbesondere von größer oder gleich 30 Gew.-%, aufweist. Insbesondere ist vorgesehen, dass der Faulschlamm, insbesondere unter Einsatz von Polymeren, entwässert wird, beispielsweise mittels Zentrifugen oder Bandfiltern.

Die erfindungsgemäße Vorrichtung zum Behandeln von phosphor-/phosphathaltigem Rohschlamm ist insbesondere geeignet zur Durchführung des erfindungsgemäßen Verfahrens. Die Vorrichtung weist auf:
- eine Einrichtung zum Eindicken des phosphor-/phosphathaltigen Rohschlamms zur Gewinnung eines eingedickten Rohschlamms unter Abtrennen eines ersten flüssigen Anteils,
- eine Einrichtung zum Desintegrieren des eingedickten Rohschlamms zur Gewinnung eines desintegrierten Rohschlamms,
- eine Einrichtung zum Verdünnen des desintegrierten Rohschlamms durch Zuführen einer Flüssigkeit zu dem desintegrierten Rohschlamm,
- eine Einrichtung zum Eindicken des verdünnten desintegrierten Rohschlamms zur Gewinnung eines eingedickten desintegrierten Rohschlamms unter Abtrennen eines zweiten flüssigen Anteils,
- eine Einrichtung zum Abtrennen von Phosphor/Phosphat aus dem zweiten flüssigen Anteil.

Vorzugsweise weist die Einrichtung zum Eindicken des verdünnten desintegrierten Rohschlamms eine Dosiereinrichtung für Flockungsmittel und/oder Flockungshilfsmittel auf.

Die Vorrichtung ist insbesondere Bestandteil einer Kläranlage, insbesondere Bestandteil einer Kläranlage für überwiegend kommunale Abwässer.

Vorzugsweise weist die Vorrichtung eine Faulungseinrichtung zum Nachbehandeln des eingedickten desintegrierten und phosphor-/phosphatabgereicherten Rohschlamms auf.

In einer bevorzugten Ausführungsform weist die Vorrichtung eine Einrichtung zum Eindicken des in der Faulungseinrichtung gebildeten ausgefaulten Schlamms, auch als Faulschlamm bezeichnet, auf zum Abtrennen eines dritten flüssigen Anteils, wobei die Vorrichtung eine Einrichtung zur Teilrückführung des dritten flüssigen Anteils zu der Einrichtung zum Verdünnen des desintegrierten Rohschlamms aufweist.

Vorzugsweise beträgt der Phosphorgehalt des Faulschlamms weniger als 20 g/kg bezogen auf die Trockenmasse des Faulschlamms.

Die Ausführungen zu dem erfindungsgemäßen Verfahren und dessen vorteilhaften Ausführungsformen gelten entsprechend für die Vorrichtung. Insbesondere weist die erfindungsgemäße Vorrichtung in bevorzugten Ausführungsformen entsprechende Einrichtungen, Vorrichtungen, Geräte oder Leitungen auf, um die Durchführung der vorteilhaften Ausführungsformen des Verfahrens zu ermöglichen.

In den nachfolgenden Figuren wird die Erfindung anhand von zwei Ausführungsbeispielen näher erläutert, ohne auf diese beschränkt zu sein. Es zeigen:
- Fig. 1: eine erste Ausführungsform der erfindungsgemäßen Vorrichtung zur Durchführung einer ersten Ausführungsform des erfindungsgemäßen Verfahrens,
- Fig. 2: eine zweite Ausführungsform der erfindungsgemäßen Vorrichtung zur Durchführung einer zweiten Ausführungsform des erfindungsgemäßen Verfahrens.

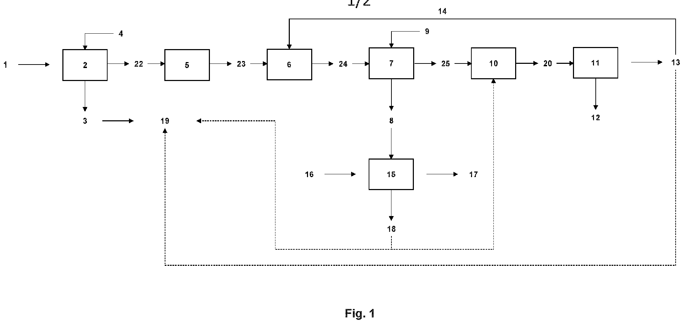

In der Fig. 1 ist eine erste Ausführungsform der erfindungsgemäßen Vorrichtung dargestellt, die das Durchführen einer ersten Ausführungsform des erfindungsgemäßen Verfahrens ermöglicht. Die Vorrichtung ist Bestandteil einer Kläranlage 19.

Fig. 1 zeigt eine erste Ausführungsform einer Vorrichtung zum Behandeln von phosphor-/phosphathaltigem Rohschlamm 1, vorliegend von phosphor-/phosphat haltigem Überschussschlamm. Die in der Fig. 1 gezeigte Vorrichtung ist insbesondere dazu geeignet, das erfindungsgemäße Verfahren gemäß Patentanspruch 1 durchzuführen. Der phosphor-/phosphathaltige Rohschlamm 1 wird zu diesem Zweck einer Einrichtung zum Eindicken 2 des phosphor-/phosphathaltigen Rohschlamms 1 zugeführt. Der Rohschlamm 1, der typischerweise einen Trockensubstanzgehalt von 0,5 Gew.-% bis 1,0 Gew.-% aufweist, wird in dieser Einrichtung zum Eindicken 2 derart eingedickt, dass der eingedickte Rohschlamm 22 einen Trockensubstanzgehalt von 5 Gew.-% bis 7 Gew.-% aufweist. Dadurch wird das Schlammvolumen typischerweise um 90 % bis 95 % reduziert. Das Eindicken des phosphor-/phosphathaltigen Rohschlamms 1 zur Gewinnung des eingedickten Rohschlamms 22 erfolgt unter Abtrennen eines ersten flüssigen Anteils 3. Bei diesem flüssigen Anteil 3 handelt es sich beispielsweise um ein Zentrat, ein Filtrat oder ein Dekantat. Bei der Einrichtung zum Eindicken 2 des phosphor-/phosphathaltigen Rohschlamms 1 handelt es sich insbesondere um eine Einrichtung mit einer Filtration, sodass es sich bei dem abgetrennten ersten flüssigen Anteil 3 um ein Filtrat handelt. Zwecks Eindicken des phosphor-/phosphathaltigen Rohschlamms 1 ist es üblich, dass Flockungsmittel 4 und/oder Flockungshilfsmittel 4 zugegeben werden.

Da der Phosphor bzw. das Phosphat in diesem Zustand zu großen Teilen noch in der festen Phase bzw. in der Trockenmasse des eingedickten Rohschlamms 22 gebunden ist, weist der erste flüssige Anteil 3 typischerweise keine besonders hohe Phosphor-/Phosphat-Konzentration auf, sodass der wesentliche Anteil des Phosphors/Phosphats dementsprechend noch in dem eingedickten Rohschlamm 22 gebunden ist.

Dieser eingedickte Rohschlamm 22 wird dann einer Einrichtung zum Desintegrieren 5 des eingedickten Rohschlamms 22 zwecks Gewinnung eines desintegrierten Rohschlamms 23 zugeführt. Durch die Desintegration wird Phosphor bzw. Phosphat, das in dem Feststoff-Anteil des eingedickten Rohschlamms 22 gebunden ist, aufgeschlossen und kann sich in dem flüssigen Anteil bzw. der Flüssigphase des desintegrierten Rohschlamms 23 lösen, wodurch der Anteil des Phosphats bzw. des Phosphors in dem flüssigen Anteil des desintegrierten Rohschlamms 23 erhöht wird. Vorliegend erfolgt die Desintegration mittels mechanischer und/oder chemischer Desintegration.

Da die Flüssigphase bzw. der flüssige Anteil des desintegrierten Rohschlamms 23 eine Sättigungsgrenze besitzt, sodass nicht beliebig große Anteile von Phosphat bzw. Phosphor in dem relativ geringen flüssigen Anteil des desintegrierten Rohschlamms 23 gelöst werden können, weist die Vorrichtung eine Einrichtung zum Verdünnen des desintegrierten Rohschlamms 23 auf. Dies erfolgt durch Zuführen einer Flüssigkeit 13 zu dem desintegrierten Rohschlamm 23, wobei die Vorrichtung zu diesem Zweck einen Mischer 6 aufweist, um eine optimale Durchmischung der zugeführten Flüssigkeit 13 und des desintegrierten Rohschlamms 23 zu ermöglichen.

Als besonders vorteilhaft wird es angesehen, wenn der verdünnte desintegrierte Rohschlamm 24 einen pH-Wert kleiner 8, bevorzugt einen pH-Wert von 4 bis 6, aufweist. Überraschenderweise hat sich gezeigt, dass ein relativ niedriger pH-Wert sich vorteilhaft auf die spätere Abtrennung von Phosphor/Phosphat auswirkt. Es wird angenommen, dass sich ein niedriger pH-Wert vorteilhaft auf die Lösbarkeit von Phosphor bzw. Phosphat in der flüssigen Phase des verdünnten desintegrierten Rohschlamms 24 auswirkt. Dies betrifft insbesondere die Lösung von chemisch gebundenem Phosphor bzw. Phosphat von an ein- und insbesondere zweiwertigen gebundenen Kationen wie Magnesium und Calcium.

Der verdünnte desintegrierte Rohschlamm 24 wird dann einer Einrichtung zum Eindicken 7 zugeführt zur Gewinnung eines eingedickten desintegrierten Rohschlamms 25 unter Abtrennen eines zweiten flüssigen Anteils 8. Dieser zweite flüssige Anteil 8 weist einen besonders hohen Anteil von Phosphor bzw. Phosphat auf, da dieser flüssige Anteil Phosphat bzw. Phosphor enthält, der beim Vorgang des Desintegrierens aus dem Feststoffanteil des eingedickten desintegrierten Rohschlamms 22 freigesetzt wurde und durch die Verdünnung sich in der flüssigen Phase durch eine höhere Aufnahmekapazität lösen und somit anreichern konnte. Dieser flüssige Anteil 8 wird dann einer Einrichtung zum Abtrennen von Phosphor/Phosphat 15 aus dem zweiten flüssigen Anteil 8 zugeführt. Bei dieser Einrichtung 15 handelt es sich insbesondere um einen Struvit-Reaktor, wobei in diesem Struvit-Reaktor unter Zugabe von Fällmitteln 16 eine Magnesium-Ammonium-Phosphat-Fällung (MAP-Fällung) erfolgt. Bei den Fällmitteln 16 handelt es sich beispielsweise um Magnesiumchlorid (MgCl₂) oder Magnesiumoxid (MgO) oder Magnesiumhydroxid (Mg(OH)₂). Um die MAP-Fällung zu begünstigen, ist es durchaus denkbar, dem zweiten flüssigen Anteil 8 Natronlauge (NaOH) zuzugeben.

Aus der Einrichtung zum Abtrennen von Phosphor/Phosphat 15 können dann in bekannter Art und Weise, beispielsweise unter Verwendung von Filtern, Struvit-Kristalle 17 und ein entsprechend phosphor-abgereichertes Filtrat 18 gewonnen werden. Das phosphor-/phosphat-abgereicherte Filtrat 18 kann an unterschiedlichen Stellen der Kläranlage 19 zugeführt werden. Es ist beispielsweise denkbar, das phosphor-/phosphat-abgereicherte Filtrat 18 einer Faulungseinrichtung 10 zuzuführen. Dieser Faulungseinrichtung 10 kann auch der eingedickte desintegrierte Rohschlamm 25 zwecks Nachbehandeln des Rohschlamms 25 zugeführt werden. Das phosphor-/phosphat-abgereicherte Filtrat 18 weist vorzugsweise einen Anteil von Phosphor in dem Filtrat von kleiner 100 mg/L, vorzugsweise kleiner 20 mg/L auf.

Die Vorrichtung weist ferner eine Einrichtung zum Eindicken 11 des in der Faulungseinrichtung 10 gebildeten ausgefaulten Schlamms 20 auf. Bei diesem Eindicken wird ein dritter flüssiger Anteil 13 von dem übrigen festen Anteil 12 des ausgefaulten Schlamms 20 abgetrennt. Dieser flüssige Anteil 13 wird teilweise mittels einer Rückführung 14 dem Mischer 6 zugeführt und dient vorliegend als Flüssigkeit 13 zum Verdünnen des desintegrierten Rohschlamms 23.

Es ist durchaus denkbar, dass ein Teil des dritten flüssigen Anteils 13 der Kläranlage 19 an anderer Stelle zugeführt wird.

Es hat sich als besonders vorteilhaft erwiesen, wenn, wie dies in der Fig. 1 dargestellt ist, der Einrichtung zum Eindicken 7 des verdünnten desintegrierten Rohschlamms 24 bzw. dem verdünnten desintegrierten Rohschlamm 24 Flockungsmittel 9 und/oder Flockungshilfsmittel 9 zugegeben werden. Überraschenderweise hat sich gezeigt, dass, insbesondere bei einem niedrigen pH-Wert, und unter Zugabe von Flockungsmitteln 9 bzw. Flockungshilfsmitteln 9 eine erneute Eindickung des verdünnten desintegrierten Rohschlamms 24 möglich ist. Die Verwendung des dritten flüssigen Anteils 13 hat den besonderen Vorteil, dass einerseits der Anteil an Ammoniumstickstoff in den verdünnten desintegrierten Rohschlamm 24 erhöht wird und andererseits Teile des in dem dritten flüssigen Anteil 13 noch vorhandenen gelösten Phosphors/Phosphats der Einrichtung zum Abtrennen des Phosphors/Phosphats 15 zugeführt werden. Gleichzeitig wird bei dieser Vorgehensweise auch die Rückbelastung der Kläranlage 19 mit Ammoniumstickstoff durch die Struvit-Kristallisation zu gleichen Anteilen wie das Phosphor/Phosphat gemindert.

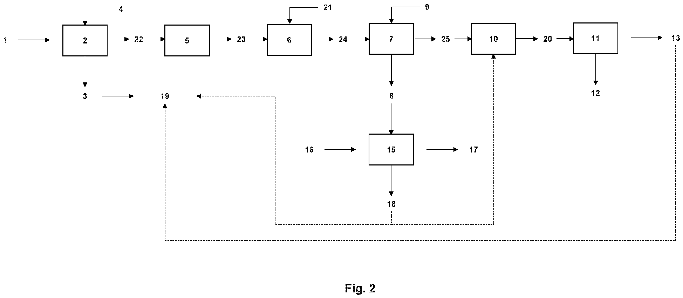

Die in der Fig. 2 dargestellte Ausführungsform der Vorrichtung unterscheidet sich von der in der Fig. 1 gezeigten Vorrichtung im Wesentlichen dadurch, dass anstatt des dritten flüssigen Anteils 13 Brauchwasser 21 und/oder Trinkwasser 21 zum Verdünnen des desintegrierten Rohschlamms 23 verwendet wird. Ferner erfolgt die Desintegration bei dieser Ausführungsform thermisch, thermo-chemisch oder mittels Thermo-Druck-Hydrolyse.

### Bezugszeichenliste

- 1: phosphor-/phosphathaltiger Rohschlamm
- 2: Einrichtung zum Eindicken
- 3: erster flüssiger Anteil
- 4: Flockungsmittel/Flockungshilfsmittel
- 5: Einrichtung zum Desintegrieren
- 6: Mischer
- 7: Einrichtung zum Eindicken
- 8: zweiter flüssiger Anteil
- 9: Flockungsmittel/Flockungshilfsmittel
- 10: Faulungseinrichtung
- 11: Einrichtung zum Eindicken
- 12: fester Anteil
- 13: dritter flüssiger Anteil
- 14: Rückführung
- 15: Einrichtung zum Abtrennen von Phosphor/Phosphat
- 16: Fällmittel
- 17: Struvit-Kristalle
- 18: Filtrat
- 19: Kläranlage
- 20: ausgefaulter Schlamm
- 21: Brauchwasser oder Trinkwasser
- 22: eingedickter Rohschlamm
- 23: desintegrierter Rohschlamm
- 24: verdünnter desintegrierter Rohschlamm
- 25: eingedickter desintegrierte Rohschlamm

## Patentansprüche

1. Verfahren zum Behandeln von phosphor-/phosphathaltigem Rohschlamm (1), wobei das Verfahren die folgenden Verfahrensschritte aufweist:
- Bereitstellen von phosphor-/phosphathaltigem Rohschlamm (1),
- Eindicken des phosphor-/phosphathaltigen Rohschlamms (1) zur Gewinnung eines eingedickten Rohschlamms (22) unter Abtrennen eines ersten flüssigen Anteils (3),
- Desintegrieren des eingedickten Rohschlamms (1) zur Gewinnung eines desintegrierten Rohschlamms (23),
- Verdünnen des desintegrierten Rohschlamms (23) durch Zuführen einer Flüssigkeit (13, 21) zu dem desintegrierten Rohschlamm (23),
- Eindicken des verdünnten desintegrierten Rohschlamms (24) zur Gewinnung eines eingedickten desintegrierten Rohschlamms (25) unter Abtrennen eines zweiten flüssigen Anteils (8),
- Abtrennen von Phosphor/Phosphat aus dem zweiten flüssigen Anteil (8).

2. Verfahren nach Anspruch 1, wobei es sich bei dem phosphor-/phosphathaltigen Rohschlamm (1) um Überschussschlamm handelt, vorzugsweise Überschussschlamm mit einem Trockensubstanzgehalt von 0,5 Gew.-% bis 1,0 Gew.-%.

3. Verfahren nach Anspruch 1 oder 2, wobei der eingedickte desintegrierte Rohschlamm (23) einen Trockensubstanzgehalt von 5 Gew.-% bis 12 Gew.-%, bevorzugt von 7 Gew.-% bis 10 Gew.-%, aufweist.

4. Verfahren nach Anspruch 1 oder 2, wobei der verdünnte desintegrierte Rohschlamm einen Trockensubstanzgehalt von 1 Gew.-% bis 3 Gew.-%, bevorzugt von 1,5 Gew.-% bis 2,0 Gew.-%, aufweist.

5. Verfahren nach einem der Ansprüche 1 bis 3, wobei der verdünnte desintegrierte Rohschlamm (24) einen pH-Wert von kleiner 8 aufweist, insbesondere einen pH-Wert kleiner oder gleich 7 aufweist, besonders bevorzugt einen pH-Wert von 4 bis 6 aufweist.

6. Verfahren nach einem der Ansprüche 1 bis 5, wobei eine pH-Wert-Absenkung des verdünnten desintegrierten Rohschlamms (24) und/oder des eingedickten Rohschlamms (22) und/oder des eingedickten desintegrierten Rohschlamms (23) mittels Zugabe einer Säure erfolgt.

7. Verfahren nach einem der Ansprüche 1 bis 6, wobei das Desintegrieren mittels mechanischer Hydrolyse und/oder chemischer Hydrolyse und/oder thermischer Hydrolyse erfolgt, insbesondere das Desintegrieren ausschließlich mittels thermischer Hydrolyse erfolgt.

8. Verfahren nach einem der Ansprüche 1 bis 7, wobei das Eindicken des phosphor-/phosphathaltigen Rohschlamms (1) und/oder das Eindicken des verdünnten desintegrierten Rohschlamms (24) unter Verwendung eines mechanischen Eindickers erfolgt, insbesondere unter Verwendung eines Dekanters, Schneckeneindickers, Rotationsfilters, Zentrifuge und/oder Bandfilters und/oder Bandeindickers.

9. Verfahren nach einem der Ansprüche 1 bis 8, wobei vor dem Eindicken und/oder während des Eindickens des phosphor-/phosphathaltigen Rohschlamms (1) und/oder des verdünnten desintegrierten Rohschlamms (24) dem phosphor-/phosphathaltigen Rohschlamm (1) und/oder dem desintegrierten Rohschlamm (23) und/oder dem verdünnten desintegrierten Rohschlamm (24) Flockungsmittel (4, 9) und/oder Flockungshilfsmittel (4, 9) zugegeben werden.

10. Verfahren nach Anspruch 9, wobei das Flockungsmittel (4, 9) und/oder das Flockungshilfsmittel (4, 9) Polymere aufweist, bevorzugt Polyacrylamide aufweist.

11. Verfahren nach einem der Ansprüche 1 bis 10, das Verdünnen des desintegrierten Rohschlamms (23) durch Zuführen von Brauchwasser und/oder Trinkwasser erfolgt.

12. Verfahren nach einem der Ansprüche 1 bis 11, wobei der eingedickte desintegrierten Rohschlamm (25) einer Faulungseinrichtung (10) zugeführt wird, wobei der der Faulungseinrichtung (10) zugeführte eingedickte desintegrierte Rohschlamm (25) nach der Faulung eingedickt, insbesondere entwässert wird, unter Abtrennen eines dritten flüssigen Anteils (13), wobei das Verdünnen des desintegrierten Rohschlamms (23) durch Zuführen zumindest eines Teils des dritten flüssigen Anteils (13) erfolgt.

13. Verfahren nach einem der Ansprüche 1 bis 12, wobei das Verdünnen des desintegrierten Rohschlamms (23) unter Verwendung eines Mischers (6) erfolgt, insbesondere unter Verwendung eines Rührkessel, eines Strömungsrohrs und/oder einer Vermischungsdüse.

14. Vorrichtung zum Behandeln von phosphorhaltigem Rohschlamm (1), insbesondere Vorrichtung zur Durchführung des Verfahrens nach einem der Ansprüche 1 bis 13, wobei die Vorrichtung aufweist:
- eine Einrichtung zum Eindicken (2) des phosphor-/phosphathaltigen Rohschlamms (1) zur Gewinnung eines eingedickten Rohschlamms (22) unter Abtrennen eines ersten flüssigen Anteils (3),
- eine Einrichtung zum Desintegrieren (5) des eingedickten Rohschlamms (22) zur Gewinnung eines desintegrierten Rohschlamms (23),
- eine Einrichtung zum Verdünnen des desintegrierten Rohschlamms (23) durch Zuführen einer Flüssigkeit (13, 21) zu dem desintegrierten Rohschlamm (23),
- eine Einrichtung zum Eindicken (7) des verdünnten desintegrierten Rohschlamms (24) zur Gewinnung eines eingedickten desintegrierten Rohschlamms (25) unter Abtrennen eines zweiten flüssigen Anteils (8),
- eine Einrichtung zum Abtrennen von Phosphor/Phosphat (15) aus dem zweiten flüssigen Anteil (8).

15. Vorrichtung nach Anspruch 14, wobei die Vorrichtung eine Faulungseinrichtung (10) zum Nachbehandeln des eingedickten desintegrierten Rohschlamms (25) und eine Einrichtung zum Eindicken (11) des in der Faulungseinrichtung (10) gebildeten ausgefaulten Schlamms (20) aufweist unter Abtrennen eines dritten flüssigen Anteils (13), wobei die Vorrichtung eine Einrichtung zum Rückführen (14) des dritten flüssigen Anteils (13) zu der Einrichtung zum Verdünnen des desintegrierten Rohschlamms (23) aufweist.
